(19) Europäisches Patentamt
European Patent Office
Office européen des brevets

(11) **EP 2 388 934 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(51) Int Cl.:
*H04B 10/10* (2006.01)  *H04B 10/158* (2006.01)

(21) Anmeldenummer: **11166864.6**

(22) Anmeldetag: **20.05.2011**

(54) **Verfahren zur Korrektur atmosphärisch verzerrter optischer Wellenfronten**

Method for adjusting atmospherically distorted optical wave fronts

Procédé de correction de fronts d'ondes optiques déformés dans l'atmosphère

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2010 DE 102010021340**

(43) Veröffentlichungstag der Anmeldung:
**23.11.2011 Patentblatt 2011/47**

(73) Patentinhaber: **Deutsches Zentrum für Luft- und Raumfahrt e.V.**
**51147 Köln (DE)**

(72) Erfinder: **Giggenbach, Dirk**
**86932, Pürgen (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**US-A1- 2010 080 565    US-B1- 7 197 248**

**Beschreibung**

Die Erfindung betrifft ein Verfahren zur Korrektur atmosphärisch verzerrter optischer Wellenfronten.

Ein derartiges Verfahren kann in freistrahloptischen Kommunikationssystemen eingesetzt werden. Bei der optischen Freistrahlkommunikation durch die Atmosphäre mittels gerichteter modulierter Laserstrahlung kann das optische Signal durch die Brechungsindexturbulenz der Luft verzerrt werden. Dieser physikalische Effekt führt im weiteren Verlauf der Wellenpropagation zu Interferenzeffekten und zu einer verzerrten Wellenfront, wobei die Stärke der Effekte und deren Änderungsgeschwindigkeit von den lokalen atmosphärischen Bedingungen und der Länge der atmosphärischen Strecke abhängen. Wellenfrontverzerrungen können hierbei in einer Größenordnung im Zentimeterbereich bis Dezimeterbereich auftreten. Die Änderungsgeschwindigkeit liegt im Bereich weniger Millisekunden. Für den Empfänger relevant ist dabei nur das Verhältnis zwischen Empfangsaperturdurchmesser und Wellenfrontstrukturgröße. Dieses beträgt in den hier praktisch relevanten Situationen typischer Weise 1 bis etwa 6.

Beim Signalempfänger wirkt sich eine Wellenfrontverzerrung als Unschärfe aus. Dies wird im Folgenden erläutert. Die Empfangsapertur des Datenempfangsterminals (typischer Weise eine Linse oder ein Spiegelteleskop) kann im atmosphärisch ungestörten Fall das Empfangssignal in einem minimalen fokalen Fleck (Spot) fokussieren, im sogenannten Mode, welcher die kleinste durch das Teleskop erzeugbare Strukturgröße darstellt (ideales Auflösungsvermögen des Teleskops). Bei einem optischen Datenempfangsterminal wird dieser Spot entweder direkt auf einen sehr kleinen Fotodetektor gerichtet oder in den Kern einer Singlemode-Glasfaser eingekoppelt. Das Einkoppeln in eine Singlemode-Glasfaser erlaubt optimale Systemempfindlichkeit, sehr hohe Datenraten und den Einsatz diverser Modulationsverfahren und ist daher in hochperformanten zukunftssicheren Kommunikationssystemen bevorzugt.

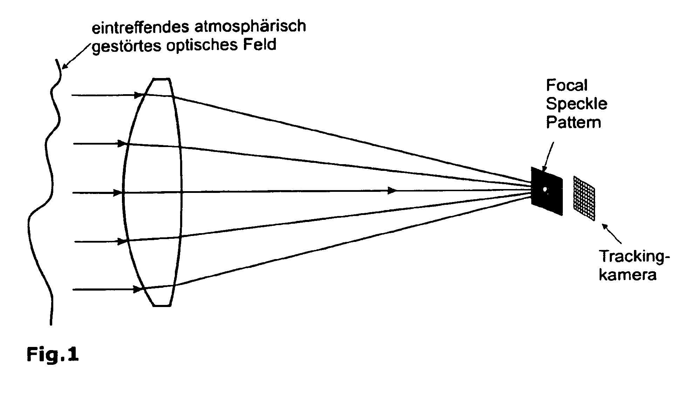

Sofern atmosphärische Störungen vorliegen, führt die Wellenfrontverzerrung dazu, dass sich im Fokus der Empfangsvorrichtung trotz optimaler Optik kein minimaler Spot bilden kann, sondern sich stattdessen ein fokales Speckle-Muster (Focal Speckle Pattern, FSP) bildet, welches sich aus mehreren unterschiedlich starken und in der Form verzerrten Spots zusammensetzt (s. Fig. 1).

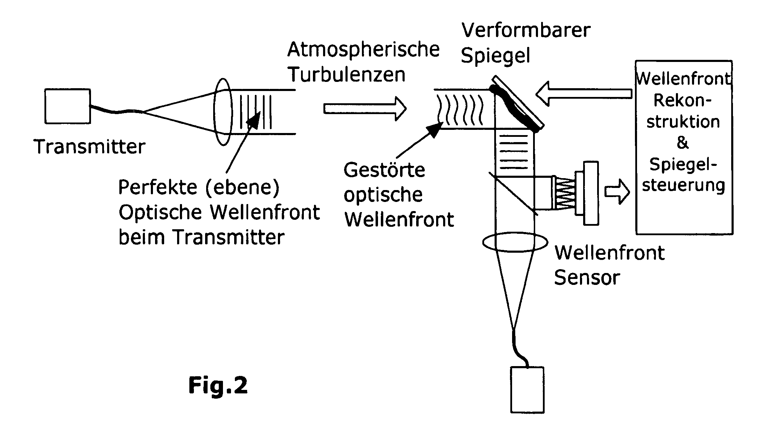

Dieses Focal Speckle Pattern verhindert eine optimale Einkopplung in eine Singlemode-Faser und macht daher die Anwendung fasergebundener Empfangsverfahren in atmosphärischen Links je nach atmosphärischen Bedingungen schwierig bis völlig unmöglich. Beim Einsatz einer sogenannten adaptiven Optik (AO) besteht die Möglichkeit, den Fehler der Wellenfront durch entsprechende Messgeräte zu bestimmen. Hierbei kann ein Wellenfrontsensor verwendet werden, wobei die halbe Amplitude der inversen Form des Fehlers der Wellenfront auf einen verformbaren Spiegel (Deformable Mirror, DM) aufgeprägt wird, der im Strahlengang angeordnet ist. Die gemessene Wellenfrontverzerrung kann somit ausgeglichen werden, sodass dem Empfangsteleskop wieder eine ideale (plane) Wellenfront zugeführt werden kann (s. Fig. 2). Diese korrigierte Feldverteilung kann dann wieder optimal in einen minimalen Spot fokussiert werden.

Das Hauptproblem bei der Verwendung einer adaptiven Optik liegt darin, dass die zu korrigierende Phase der optischen Welle (=Wellenfront) im Gegensatz zur Amplitude bzw. Intensität nicht direkt messbar ist. Vielmehr muss über weitere optische Abbildungseffekte auf die Wellenfront zurückgerechnet werden, was Systeme mit einer adaptiven Optik aufwändig und empfindlich in der Kallibrierung macht.

Aus der beobachtenden Astronomie sind AO-Techniken bekannt, welche hauptsächlich in der direkten Messung der Wellenfrontverzerrung mittels eines Shack-Hartmann-Sensors (SHS) und der Umrechnung der Messwerte in Ansteuersignale für den DM bestehen. Diese Systeme werden in terrestrischen Teleskopen eingesetzt und sind aus der modernen Astronomie nicht mehr wegzudenken. Die Systeme sind dabei relativ komplex und störempfindlich (z.B. die Justage/Abstimmung des Wellentrontsensors zum DM), was ihren Einsatz in optischen Datenlinks erschwert: diese Links sind oft mobil und die Geräte müssen daher leicht und robust sein, zudem unterliegen die optischen Datenlinks meist sehr viel stärkeren atmosphärischen Störungen als dies bei astronomischem Einsatz der Fall ist. Der SHS kann mit diesen starken Störungen oftmals nicht mehr richtig arbeiten. Zudem sind die SHSs im mittleren Infrarot relativ teuer (InGaAs-Kameras). Es gibt andere Wellenfrontsensoren (z.B. basierend auf Interferometern) welche gewisse Nachteile des Shack-Hartmann-Sensors ausgleichen, sie erfordern aber auch einen zusätzlichen Aufwand für die Messung der Wellenfront und verteuern und vergrößern das Empfangssystem daher.

Bei den Verfahren der klassischen AO besteht das Ziel darin, die atmosphärischen Störungen zu korrigieren um ein scharfes Bild des Beobachtungsobjektes zu erhalten. Für die Datenlinks hingegen ist die Bilderzeugung unerheblich, da das "beobachtete" Objekt sowieso immer nur die Sendeapertur ist. Stattdessen ist hier das Ziel, aus der Signalverteilung an der Empfangsapertur immer einen möglichst kleinen Fokusspot zu generieren. Andererseits sind die atmosphärischen Störungen meist stärker, da die Blickrichtung zwischen den Terminals meist unter einem flachen Winkel verläuft und die Terminals befinden sich in tieferen und damit stärker turbulenten atmosphärischen Schichten. Kommunikationslinks zwischen in der Atmosphäre befindlichen Kommunikationspartnern verlaufen hauptsächlich horizontal (Links zwischen Flugzeug und Boden oder niedrigfliegendem Satelliten und Boden). Daher befindet sich ein großer Teil des Linkpfades in geringer Höhe. Da die atmosphärische Turbulenzstärke in Bodennähe am größten ist und mit der Höghe abnimmt, ist also ein flach verlaufender Link sehr viel stärker durch atmosphärische Turbulenz betroffen als einer der steil nach oben verläuft. Zudem ist die zeitliche Änderung der Störungen erheblich schneller, insbes. wenn mit einem schnellen mobilen Partner (z.B. Flugzeug, Satellit) kommuniziert wird.

Ein Verfahren zur Korrektur atmosphärisch verzerrter Wellenfronten ist aus der US-A-0 620 694 bekannt.

Aufgabe der Erfindung ist es, ein Verfahren zur Korrektur atmosphärisch verzerrter optischer Wellenfronten bereitzustellen, welches einen geringeren technischen Aufwand erfordert und weniger störungsanfällig ist.

Die Lösung der Aufgabe erfolgt erfindungsgemäß durch die Merkmale des Anspruchs 1.

Das erfindungsgemäße Verfahren zur Korrektur atmosphärisch verzerrter optischer Wellenfronten in freistrahloptischen Kommunikationssystemen umfasst die folgenden Schritte:

- Erfassen der Verteilung der Intensität des Lichtes auf der Empfängerseite im Fokus einer Empfängervorrichtung,

- Anwenden eines Watershed-Algorithmus auf die erfasste fokale Intensitätsverteilung, sodass näherungsweise diejenigen zusammenhängenden Flächenabschnitte im Fokus der Empfängervorrichtung bestimmt werden, in denen die Lichtintensität ein gleichbleibendes Phasenvorzeichen hat,

- Zuordnen einer Phasenvorzeichenverteilung im Wertebereich $[-\pi/2; \pi/2]$, wobei jedem Intensitätsmaximum ein Phasenvorzeichen durch die folgenden Schritte zugewiesen wird:

  - Erstellen eines Intensitätsprofilverlaufs von einem Intensitätsmaximum zu einem benachbarten Intensitätsmaximum,

  - Zuweisen von zwei verschiedenen Phasenvorzeichen zu den betrachteten Intensitätsmaxima, sofern die Intensität im Profilverlauf zwischen diesen Intensitätsmaxima einen festgelegten Schwellwert unterschreitet,

  - Zuweisen von zwei gleichen Phasenvorzeichen zu dem betrachteten Intensitätsmaxima, sofern die Intensität im Profilverlauf zwischen diesen Intensitätsmaxima einen festgelegten Schwellwert nicht unterschreitet.

Sämtliche genannten Verfahrensschritte beziehen sich auf die Intensitätsverteilung in der Fokusebene der Empfangsvorrichtung.

Die Grundidee der Erfindung besteht darin, dass es einen statistischen Zusammenhang zwischen der leicht messbaren Intensitätsverteilung im Fokus (fokales Speckle-Muster) und der nicht direkt messbaren fokalen Phasenverteilung gibt.

Sind beide hinreichend bekannt, (d. h. kann die fokale Phasenverteilung ausreichend gut geschätzt werden) so kann auf die Phasenverteilung an der Apertur zurückgerechnet werden und die Phasenstörungen können durch einen verformbaren Spiegel korrigiert werden. Die Phasen- und Intensitätsverteilung in der Aperturebene lassen dagegen wenig Korrelation erkennen.

Erfindungsgemäß ist somit kein eigener Wellenfrontsensor mehr erforderlich. Es ist bevorzugt, dass für das Erfassen der fokalen Intensitätsverteilung eine auf der Empfängerseite ohnehin vorhandene Tracking-Kamera verwendet wird. Es entsteht somit kein zusätzlicher Leistungsverlust durch die Wellenfrontmessung.

Weiterhin kann eine erhöhte Robustheit im Vergleich zu bekannten Systemen erreicht werden, die eine adaptive Optik verwenden und bei denen die verschiedenen optischen Komponenten sehr präzise zueinander justiert und vor dem Einsatz abgeglichen werden müssen.

Das erfindungsgemäße Verfahren ist ferner unempfindlich gegen Änderungen der atmosphärischen Bedingungen:

Bei den meisten konventionellen Wellenfrontsensoren (wie dem Shack-Hartmann-Sensor) muss die Messgeometrie auf die atmosphärische Situation (Größe der Wellenfrontverzerrungsstrukturen) angepasst werden. Das erfindungsgemäße Verfahren kann dagegen immer angewendet werden,
solange die Auflösung der Tracking-Kamera hinsichtlich ihrer Pixelanzahl fein genug ist. Dies stellt bei der heute verfügbaren Digitalkameratechnik. kein größeres Problem dar.

Ferner ist das erfindungsgemäße Verfahren unempfindlich gegen Intensitätseinbrüche bei starker Turbulenz. Bei langen atmosphärischen Strecken kommt es zusätzlich zu den Wellenfrontverzerrungen auch zu starken örtlichen Intensitätsschwankungen an der Empfängerapertur. Mit diesen haben Beispielsweise Shack-Hartmann-Sensoren Probleme, da in Bereichen mit zu geringer Intensität keine Phase gemessen werden kann. Das erfindungsgemäße Verfahren arbeitet vorzugsweise mit dem Betrag der Fouriertransformierten des Aperturfeldes (=die fokale Intensitätsverteilung) und bewertet nur die Profile zwischen den fokalen Intensitätsspitzen, sodass es unempfindlich gegen Intensitätsschwankungen an der Apertur ist. Vorzugsweise wird die ermittelte fokale Phasenvorzeichenverteilung $P_{fokus}$ mit dem Wertebereich $[-\pi/2; +\pi/2]$ und gegebenenfalls $[0]$ mit der bekannten fokalen Amplitudenverteilung $A_{fokus}$ kombiniert. Hierbei werden die Amplituden aus der Wurzel der Intensitäten der fokalen Speckle Pattern (FSP) gewonnen:

$$E_{fokus} = A_{fokus} * Exp( i * P_{fokus} ) \qquad (1)$$

Anschließend erfolgt ein Transformieren der fokalen Phasenvorzeichenverteilung über eine zweidimensionale Fouriertransformationen in die Apertur. Die aus der Phasenverteilung des Aperturfeldes berechnete Aperturwellenfront wird an einem im Strahlengang befindlichen verformbaren Spiegel übermittelt, der entsprechend angesteuert wird. Somit kann die Wellenfrontverzerrung korrigiert werden.

Es ist bevorzugt, dass der Watershed-Algorithmus auf die negierte fokale Intensitätsverteilung angewandt wird.

In einer bevorzugten Ausführungsform wird der Schwellwert im Intensitätsprofilverlauf zur Bestimmung des Phasenvorzeichens zweier benachbarter Intensitätsmaxima bestimmt basierend auf dem Verhältnis vom minimalen Wert zum Mittelwert im Intensitätsprofilverlauf oder basierend auf der normierten Varianz. Alternativ kann selbstverständlich auch einfach das Minimum des Intensitätsprofilverlaufs betrachtet und geprüft werden, ob dieses Minimum einen festgelegten Schwellwert unterschreitet.

Es ist bevorzugt, dass bei der Erstellung des Intensitätsprofilverlaufs zwischen zwei benachbarten Maxima die direkte Verbindung zwischen diesen Maxima berücksichtigt wird.

Die Kamera, die zum Erfassen der Intensitätsverteilung verwendet wird, steht im Fokus des Empfangsstrahls. Bevorzugt kann eine Tracking-Kamera verwendet werden, die beispielsweise in mobilen optischen Kommunikationsterminals ohnehin vorhanden ist. Diese Kamera beobachtet die Richtung des eintreffenden Strahls. Weicht diese Richtung aufgrund von Relativbewegungen bzw. Lageänderungen der beiden Kommunikationspartner von der idealen axialen Position ab, wird ein entsprechendes Regelsignal an eine Nachführmechanik gesendet, welche den Strahl wieder in die optimale Position rückt. Somit wird sichergestellt, dass der Fokusspot des Empfangslichts trotz Bewegung und Erschütterung der Terminals ständig optimal beispielsweise auf die Empfangsglasfaser ausgerichtet bleibt.

Mit einer solchen Tracking-Kamera kann unter atmosphärischen Störungen die Intensitätsverteilung der fokalen Speckle Pattern erfasst werden. Durch Wurzelbildung kann aus der Intensität der Betrag der Feldamplitude gewonnen werden. Zwischen der fokalen komplexen Feldverteilung $E_{fokal}$ und der an der Apertur $E_{apertur}$ besteht nun ein einfacher Zusammenhang über eine skalierte zweidimensionale Fouriertransformationen (s. J. W. Goodman, "Introduction to Fourier Optics", McGraw-Hill, Second Edition, 1996):

$$E_{fokus} = F\{E_{apertur}(x/(\lambda f) , y/(\lambda f))\} \qquad (2)$$

Die Skalierung der Transformation in nummerischen Simulationen wird in D. Giggenbach, "Optimierung der optischen Freiraumkommunikation durch die turbulente Atmosphäre - Focal Array Receiver", S. 229 beschrieben.

Weitere Details werden im zweiten Teil der vorliegenden Patentanmeldung im Zusammenhang mit den Figuren erläutert.

Es ist bevorzugt, dass beim Zuordnen der Phasenvorzeichenverteilung bei dem Flächenabschnitt mit dem größten Intensitätsmaximum begonnen wird, wobei die Intensitätsprofilverläufe zu allen benachbarten Maxima hinsichtlich des Schwellwerts geprüft werden, um ihr Phasenvorzeichen in Relation zum Phasenvorzeichen des größten Maximums zu bestimmen. Anschließend erfolgt ein Zuordnen der Phasenvorzeichenverteilung bei dem Flächenabschnitt mit dem zweitgrößten Intensitätsmaximum und seinem direkten Nachbarmaxima. Das Zuordnen der Phasenvorzeichenverteilung wird entsprechend bei dem nächstkleineren Intensitätsmaxima fortgeführt, insbesondere bis alle in der fokalen Intensitätsverteilung erkennbaren Maxima mit Phasenvorzeichen versehen sind.

Das Zuordnen der Phasenvorzeichenverteilung kann bei den fünf, zehn oder zwanzig größten Intensitätsmaxima und ihren direkten Nachbarn in der fokalen Intensitätsverteilung durchgeführt werden.

Widersprüchliche Phasenvorzeichen in einzelnen Intensitätsmaxima können dadurch aufgelöst werden, dass dasjenige Phasenvorzeichen gewählt wird, dass in Relation zum größeren benachbarten Intensitätsmaximum vergeben wurde.

Übrig gebliebene Flächenabschnitte in der fokalen Intensitätsverteilung mit geringer Intensität, die nicht klar zugeordnet werden können, werden mit der neutralen Phase 0 ° versehen.

Bevorzugt werden die erfindungsgemäßen Verfahrensschritte wiederholt, sofern nach der ersten Anwendung dieser Verfahrensschritte keine ausreichende Qualität der Phasenvorzeichenverteilung erreicht werden kann.

Im Folgenden werden bevorzugte Ausführungsformen der Erfindung anhand von Figuren erläutert.

Es zeigen:

Fig. 1    eine schematische Ansicht einer atmosphärisch gestörten optischen Wellenfront bei ihrer Abbildung in den Fokus eines Empfangsterminals,

Fig. 2    die Funktionsweise eines konventionellen adaptiven Optiksystems mit einem Shack-Hartmann-Sensor als Wellenfrontsensor und einem verformbaren Spiegel,

Fig.3    den prinzipiellen optischen Aufbau einer Ausführungsform des erfindungsgemäßen Verfahrens,

Fig. 4a    die gemessene fokale Intensitätsverteilung sowie die zugehörige Phasenverteilung,

Fig. 4b    durch den Watershed-Algorithmus gewonnene Teilflächen,

Fig. 5    die Verteilung der Intensitäten nach Anwendung des Watershed-Algorithmus,

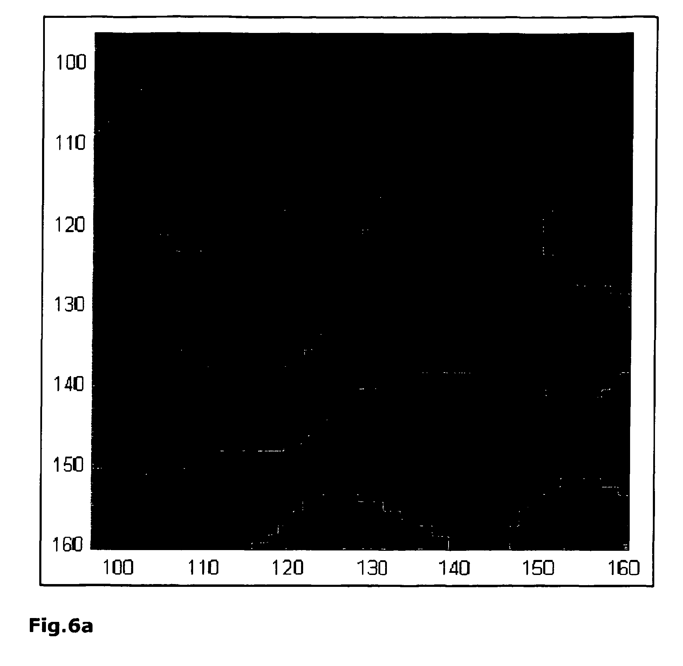

Fig. 6a    die tatsächliche Phasenvorzeichenverteilung im Fokus der Empfangsvorrichtung,

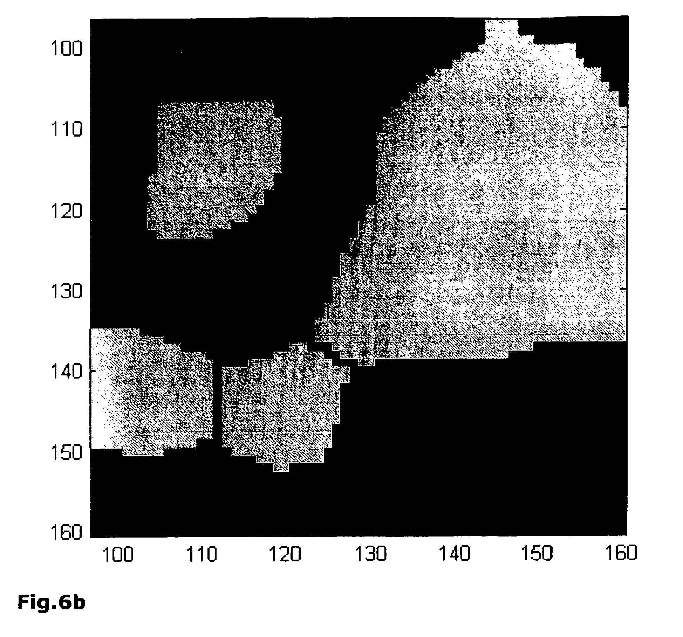

Fig. 6b    die mit der erfindungsgemäßen Methode gewonnene Phasenverteilung unter Berücksichtigung der zehn größten Intensitätsmaxima,

Fig. 7a    die fokale Intensitätsverteilung vor der Korrektur (entspricht Fig. 4a),

Fig. 7b    die fokale Intensitätsverteilung nach einmaliger Anwendung des erfindungsgemäßen Verfahrens.

Die Figuren 1 und 2 wurden bereits im Zusammenhang mit dem Stand der Technik beschrieben.

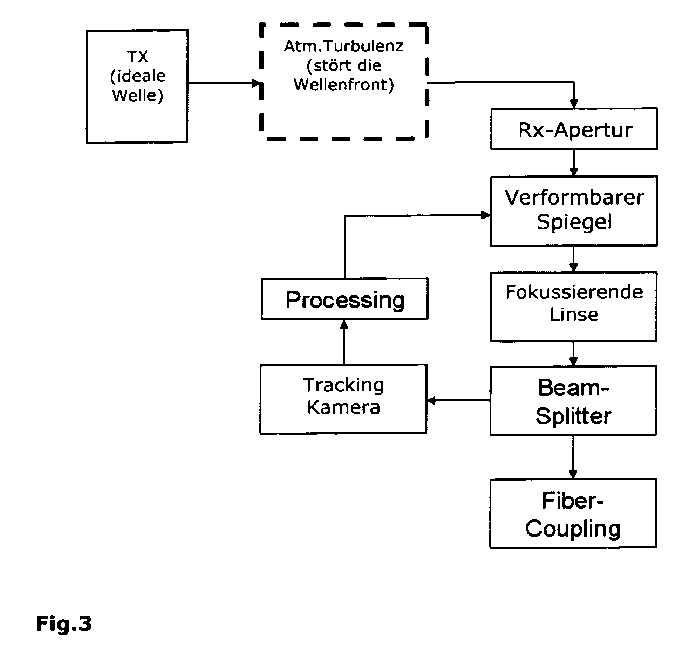

Figur 3 zeigt den prinzipiellen optischen Aufbau einer Ausführungsform des erfindungsgemäßen Verfahrens. Der Sender ist hierbei als Tx und der Empfänger als Rx gekennzeichnet.

Hinsichtlich der Gleichung (2) kann davon ausgegangen werden, dass wenn die gesamte komplexe Feldverteilung im Fokus bekannt wäre, über die inverse Fouriertransformation zurückgerechnet werden auf die Feldverteilung an der Apertur und damit eine optimale Korrektur der Wellenfrontverzerrungen durch einen Verformbaren Spiegel durchgeführt werden könnte. Nun ist aber nur die fokale Intensität bzw. der Betrag der Amplitude bekannt und nicht die Phasenverteilung. Diese Amplitudeninformation ist nicht ausreichend, um - unter Vernachlässigung der fokalen Phase - mit ausreichender Näherung auf das Feld an der Apertur zurückzuschließen (wie durch Simulationen gezeigt werden kann). Es lässt sich aber auch durch Simulationen zeigen, dass die Vereinfachung der fokalen Phasenverteilung zum "Phasenvorzeichen" (also +90° und -90° bzw. +$\pi$/2 und -$\pi$/2 in rad) ein ausreichend gutes Maß ist, um mit dieser nur durch zwei Werte quantisierten Phaseninformation durch Fourierrücktransformation auf eine ausreichend gute Aperturfeldschätzung zu schließen.

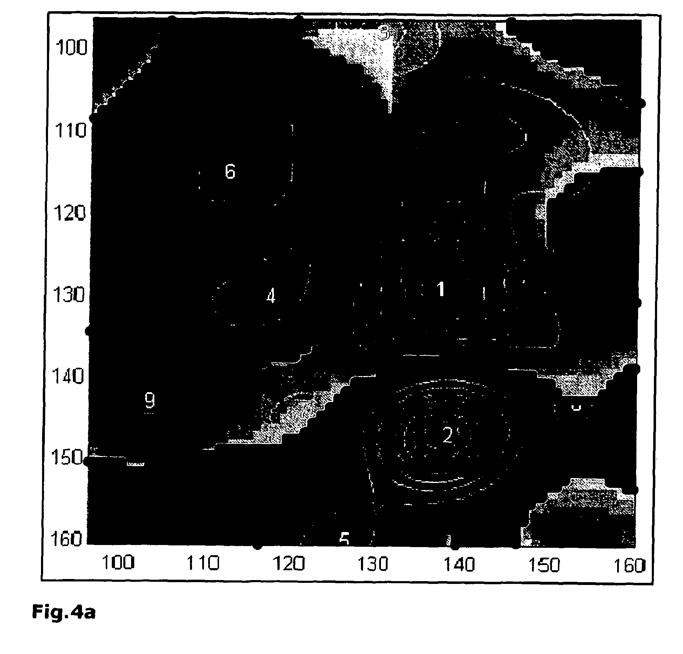

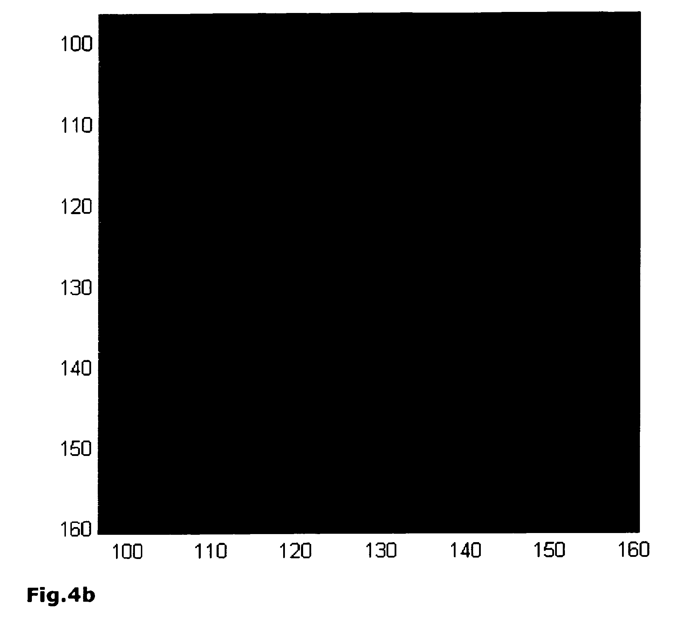

Nun besteht die Aufgabe darin, aus der fokalen Intensitätsverteilung auf das Phasenvorzeichen zu schließen. Es hat sich in Simulationen herausgestellt, dass mittels des sog. "Watershed-Algothhmus" (Wasserscheidealgorithmus) aus dem *negierten* "fokalen Intensitätsgebirge" in guter Näherung diejenigen zusammenhängenden Gebiete berechnet werden können, welche ein konstantes Phasenvorzeichen haben (s. Fig. 4).

Die Funktion des Watershed-Algorithmus besteht darin, dass er diejenigen zusammenhängenden Flächenabschnitte identifiziert, welche bei "Beregnung von oben" jeweils ein eigenes Basin bilden in dem sich das "Regenwasser" sammelt; "Bergrücken" bilden dabei Abgrenzungen zu den benachbarten Sammelbasins. Auf die negierte Intensitätsverteilung angewandt erhält man mit diesem Algorithmus diejenigen Gebiete um die Intensitätsmaxima die durch die dazwischen liegenden Intensitäts-Täler voneinander abgegrenzt werden. Nun muss diesem "Fleckenteppich" von Gebieten mit näherungsweise konstantem Phasenvorzeichen noch eine möglichst gute Phasenvorzeichenverteilung zugeordnet werden. Dabei gibt es benachbarte Gebiete mit gleichbleibendem Phasenvorzeichen (PVZ) und Nachbargebiete mit einem klaren PVZ-Wechsel. Vergleicht man dazu in Simulationen das Intensitätsprofil zwischen benachbarten Intensitätsspitzen (quasi den Geländeschnitt der Verbindung zwischen zwei Peaks des Intensitätsgebirges) so fällt auf, dass zwischen zwei Spitzen mit einem tiefen Intensitätstal dazwischen auch ein PVZ-Wechsel zwischen den zugehörigen Watershed-Gebieten besteht. Umgekehrt haben zwei benachbarte Gebiete mit gleichem PVZ nur ein relativ flach verlaufendes Verbindungsprofil zwischen den zugehörigen Spitzen. Dieser Effekt ist je nach atmosphärischer Situation mehr oder weniger ausgeprägt.

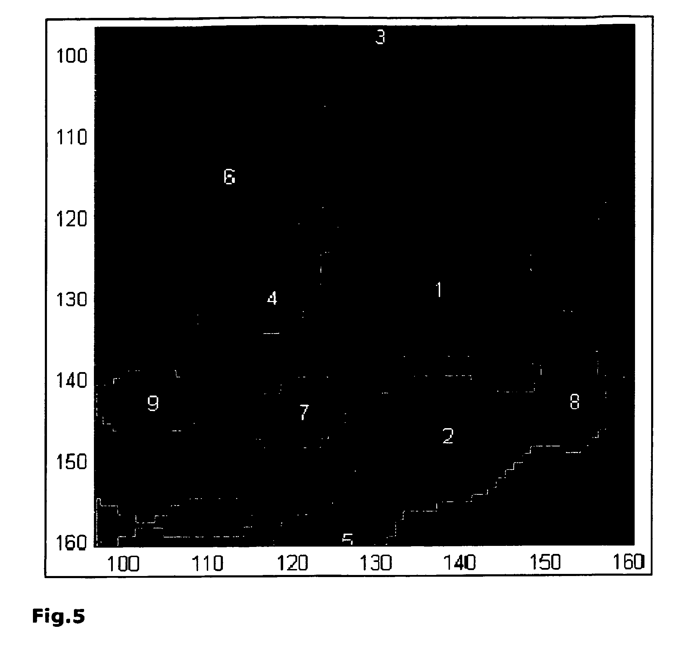

Zum Bewerten des Geländeschnittverlaufs - um zu einer Entscheidung zwischen Vorzeichenwechsel oder gleichem Vorzeichen benachbarter Gebiete zu kommen - ist nun noch eine entsprechende Entscheidungsmetrik erforderlich. Hierzu sind verschiedene Berechnungsvorschriften basierend auf dem Intensitätsverlauf zwischen benachbarten Intensitätspeaks denkbar. Hier wurde als einfache Metrik das Durchqueren eines Gebietes mit geringer Intensität verwendet (vgl. Fig. 5) hier genannt "Minimum-im-Verbindungspfad?". Es sind aber noch viele weitere Metriken denkbar und evtl. sind je nach Störungsqualität andere zu bevorzugen. Z.B. kann das Verhältnis von minimalem Wert zum Mittelwert im Verbindungsprofil verwendet werden oder die normierte Varianz. Metrikwerte unter einem Schwellwert deuten dann auf ein gleichbleibendes Vorzeichen, darüber sollte ein PVZ-Wechsel zwischen den Gebieten vorgenommen werden.

Um den Watershed-Gebieten einen Phasenvorzeichenwert zuzuweisen, beginnt man beim Gebiet mit dem höchsten Peak (Intensitätsmaximum), dem man ein Vorzeichen zuweist, untersucht dann alle Intensitätsprofilschnittvektoren zu seinen nächsten Nachbar-Peaks und stellt die entsprechenden Vorzeichenwechsel entsprechend der gewählten Metrik fest. Dann geht man zum nächst kleineren Peak und bestimmt wieder die Vorzeichenrelationen zu den direkten Nachbarn, solange bis alle im Intensitätsmuster deutlich erkennbaren Peaks behandelt sind (in der Praxis relevant sind hier etwa 5 bis 20 Peaks je nach Stärke der atmosphärischen Störungen und der Empfangsapertugröße). Schließlich müssen alle Relationen zueinander in Einklang gebracht werden und evtl. vorhandene Widersprüche durch Vorzeichendreher gelöst werden. Dabei haben die Watershed-Flächen mit größerem Peak Vorrang. Im Beispiel von Fig. 5 kommt es z.B. mit der "Minimum-im-Verbindungspfad?"-Metrik zwischen "4", "7" und "9" zum Widerspruch, der dadurch gelöst wird, das der höhere Peak "4" den PVZ-Wechsel zu "7" und "9" dominiert und damit "9" und "7" das gleiche Vorzeichen bekommen. Das PVZ von "3" dagegen wird aufgrund des Minimum-Durchgangs in der Verbindungslinie zwischen "1" und "3" offensichtlich falsch entschieden, was das Gesamtergebnis aber kaum beeinflusst. Es kommt bei der Vorzeichenverteilung mit dem gewählten Algorithmus "Minimum im Verbindungspfad?" zu einer falschen Entscheidung wie man beim Vergleich mit der realen PVZ-Verteilung erkennen kann, aber auf das Endergebnis nach der Korrektur (Fokusspotqualität) hat dieser Fehler nur geringen Einfluss, da ja allen anderen Speckle richtige PVZ zugewiesen wurden.

Alle übrigen (meist außen liegenden) Flächen mit geringer Intensität die nicht klar zugeordnet werden können tragen aufgrund der geringen enthaltenen Energie auch wenig zum Gesamtergebnis bei und werden zum Schluss mit der neutraler Phase 0° bewertet.

Schließlich wird die erhaltene fokale Phasenverteilung $P_{fokus}$ (mit Wertebereich $-\pi/2$ bis $+\pi/2$) mit der ursprünglich von der Trackingkamera gemessenen bekannten fokalen Amplitudenverteilung $A_{fokus}$ (=Wurzel der Intensität) kombiniert

$$E_{fokus} = A_{fokus} * Exp( i * P_{fokus} ) \qquad\qquad (1)$$

und über eine skalierte zweidimensionale Fourierrücktransformation (inverse Fouriertransformation) in die Apertur transformiert. Dort wird die aus der Phasenverteilung des Aperturfeldes berechnete Apertur-Wellenfront auf einen in der Pupille (= verkleinerte Abbildung von $E_{apertur}$) des Strahlengangs befindlichen DM gegeben und damit die Wellenfrontverzerrung korrigiert.

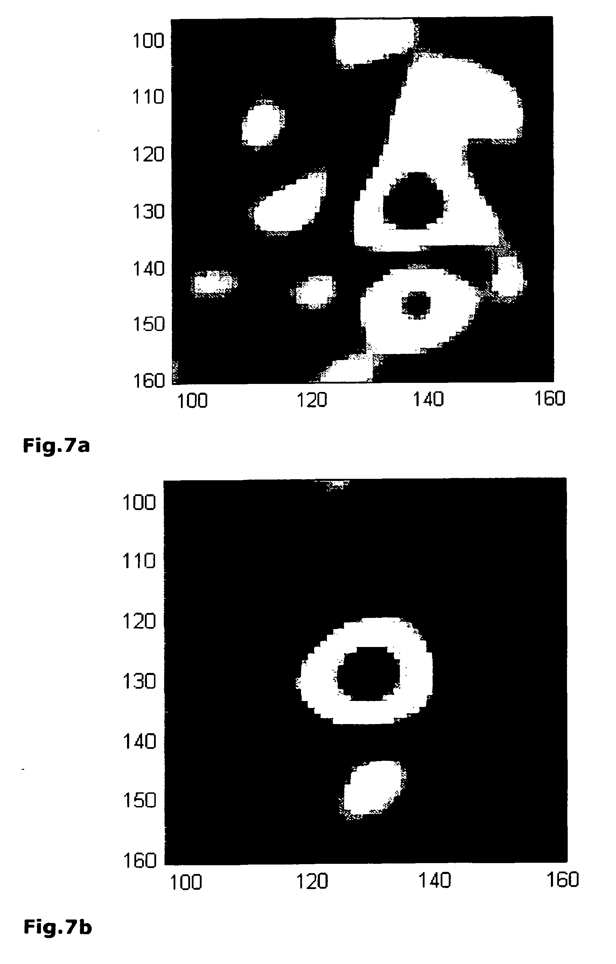

Die Verbesserung durch das erfindungsgemäße Verfahren kann direkt in der Fokusverteilung des korrigierten Feldes erkannt werden. Es besteht nur noch ein zentraler Spot anstelle des fokalen Speckle Pattern (FSP). Dieser Unterschied ist in den Fign. 7a und 7b dargestellt.

Die Qualität des Gesamtergebnisses hängt von diversen Randbedingungen wie der Stärke der atmosphärischen Störungen und der Auflösung des FSP durch die Tracking-Kamera ab. Prinzipiell gilt, dass je mehr fokale Gebiete um Maxima zur Korrektur herangezogen werden, desto mehr Lichtenergie optimiert abgebildet wird und desto besser wird das Gesamtergebnis. Umso schwieriger (weniger eindeutig) wird jedoch auch die Phasenvorzeichenzuordnung in den Randgebieten. Prinzipiell können auch andere Metriken, die nicht den Intensitätsprofilverlauf betreffen, angewandt werden. Beispielsweise kann eine Metrik auch auf der in den Teilflächen beinhalteten Energie und dem Gefälle zwischen den Maxima beruhen. Eine derartige Metrik dürfte in stärker gestörten Szenarien eindeutigere Aussagen liefern.

Die Eindeutigkeit des beschriebenen Verfahrens sinkt mit zunehmender Störungsstärke, ausgedrückt durch $D/r_0$. $r_0$ ist dabei der sog. "Fried-Parameter", ein Maß für die Strukturgrößen der atmosphärisch gestörten Felder; $(D/r_0)^2$ ist ein Schätzwert für die Anzahl der fokalen Speckle-Spots. Bei zu großem $D/r_0$ gibt es zu viele nahezu gleich hohe fokale Speckle und die Zuordnung in absteigender Intensität funktioniert daher nicht mehr eindeutig. Gelingt dann keine eindeutige Zuordnung aller Vorzeichengebiete mehr so kann diese Zuordnung für die unklaren Gebiete auch durch ***ausprobieren*** gewonnen werden, was allerdings zu Lasten der Reaktionszeit des Systems geht. Anstatt der Rücktransformation des gesamten geschätzten fokalen Feldes bei jedem Probierschritt kann dann auch vorteilhafter zunächst nur die separate Rücktransformation der einzelnen Gebiete mit der nachträglichen additiven Kombination der Ergebnisse in der Aperturebene geschehen. Dann können schnell verschiedene Phasenvorzeichenkombinationen direkt in der Aperturfeldverteilung durchprobiert werden, ohne für jede Testkombination die (rechenintensive) Gesamt-IFFT des Fokusfeldes (Rücktransformation in die Aperturebene) durchführen zu müssen.

Bei dem erfindungsgemäßen Verfahren muss beachtet werden, dass nicht alle einzelnen Speckle im Fokus immer ein eindeutiges (bzw. in der Speckle-Fläche gleichbleibendes) Phasenvorzeichen haben und dieses zu Nachbarn immer exakt um 180 ° wechselt oder genau gleich bleibt. Eine solche Situation liegt nur bei gering gestörten Fällen vor (die Grenze liegt bei etwa $D/r_0 < 6$), und diese Eigenschaft verliert sich mit steigender Speckle-Zahl bzw. mit steigendem $D/r_0$. Sofern daher die atmosphärischen Störungen ein gewisses Ausmaß nicht überschreiten, kann mit dem erfindungsgemäßen Verfahren eine Verbesserung erreicht werden. Dies ist selbstverständlich bei einer vollständig gleich verteilten Phasenverteilung in beliebigen fokalen Speckle-Mustern, die keine Korrelation zur Intensität aufweisen, nicht der Fall.

Das erfindungsgemäße Verfahren kann bei höchstratigen atmosphärischen freistrahloptischen Kommunikationssystemen mit Singlemode-Fasereinkopplung verwendet werden, ferner bei atmosphärischen freistrahloptischen Kommunikationssystemen mit Überlagerungsempfang, bei optischen Satteliten-Downlinks, bei der optischen Übertragung von Frequenznormalen ("Synchronisation optischer Uhren") und in der beobachtenden Astronomie.

**Patentansprüche**

1. Verfahren zur Korrektur atmosphärisch verzerrter optischer Wellenfronten in freistrahloptischen Kommunikationssystemen, mit den Schritten:

   - Erfassen der Verteilung der Intensität des Lichtes auf der Empfängerseite im Fokus einer Empfängervorrichtung,
   - Anwenden eines Watershed-Algorithmus auf die erfasste fokale Intensitätsverteilung, sodass näherungsweise diejenigen zusammenhängenden Flächenabschnitte im Fokus der Empfängervorrichtung bestimmt werden, in denen die Lichtintensität ein gleichbleibendes Phasenvorzeichen hat,
   - Zuordnen einer Phasenvorzeichenverteilung im Wertebereich $[-\pi/2; \pi/2]$, wobei jedem Intensitätsmaximum ein Phasenvorzeichen durch die folgenden Schritte zugewiesen wird:

      - Erstellen eines Intensitätsprofilverlaufs von einem Intensitätsmaximum zu einem benachbarten Intensitätsmaximum,
      - Zuweisen von zwei verschiedenen Phasenvorzeichen zu den betrachteten Intensitätsmaxinia, sofern die Intensität im Profilverlauf zwischen diesen Intensitätsmaxima einen festgelegten Schwellwert unterschreitet,
      - Zuweisen von zwei gleichen Phasenvorzeichen zu dem betrachteten Intensitätsmaxima, sofern die Intensität im Profilverlauf zwischen diesen Intensitätsmaxima festgelegten Schwellwert nicht unterschreitet.

2. Verfahren nach Anspruch 1, **gekennzeichnet durch** die weiteren Verfahrensschritte:

   - Kombinieren der ermittelten fokalen Phasenvorzeichenverteilung mit dem Wertebereich $[-\pi/2; \pi/2]$ und gegebenenfalls [0] mit der bekannten fokalen Amplitudenverteilung, wobei die Amplituden aus der Wurzel der Intensitäten der fokalen Speckle Pattern (FSP) gewonnen werden,
   - Transformieren der fokalen Phasenvorzeichenverteilung über eine zweidimensionale Fourier-Rücktransformation in die Apertur.
   - Übermitteln der aus der Phasenvorzeichenverteilung des Aperturfeldes berechneten Aperturwellenfront an einen im Strahlengang befindlichen verformbaren Spiegel zur Korrektur der Wellenfrantverzerrung.

3. Verfahren nach Anspruch 1 oder 2, **dadurch gekennzeichnet, dass** der Watershed-Algorithmus auf die negierte fokale Intensitätsverteilung angewandt wird.

4. Verfahren nach einem der Ansprüche 1-3, **dadurch gekennzeichnet, dass** der Schwellwert im Intensitätsprofilverlauf zur Bestimmung des Phasenvorzeichens zweier benachbarter Intensitätsmaxima bestimmt wird basierend auf dem Verhältnis vom minimalen Wert zum Mittelwert im Intensitätsprofilverlauf oder basierend auf der normierten Varianz.

5. Verfahren nach einem der Ansprüche 1-4, **dadurch gekennzeichnet, dass** bei der Erstellung des Intensitätsprofilverlaufs zwischen zwei benachbarten Maxima die direkte Verbindung zwischen diesen Maxima berücksichtigt wird.

6. Verfahren nach einem der Ansprüche 1-5, **dadurch gekennzeichnet, dass** beim Zuordnen der Phasenvorzeichenverteilung bei dem Flächenabschnitt mit dem größten Intensitätsmaximum begonnen wird, wobei die Intensitätsprofilverläufe zu allen benachbarten Maxima hinsichtlich des Schwellwerts geprüft werden, um ihr Phasenvorzeichen in Relation zum Phasenvorzeichen des größten Maximums zu bestimmen,
anschließend das Zuordnen der Phasenvorzeichenverteilung bei dem Flächenabschnitt mit dem zweitgrößten Intensitätsmaximum und seinen direkten Nachbarmaxima fortgeführt wird und

das Zuordnen der Phasenvorzeichenverteilung bei den nächstkleineren Intensitätsmaxima fortgeführt wird, insbesondere bis alle in der fokalen Intensitätsverteilung erkennbaren Maxima mit Phasenvorzeichen versehen sind.

7. Verfahren nach Anspruch 6, **dadurch gekennzeichnet, dass** das Zuordnen der Phasenvorzeichenverteilung bei den 5, 10 oder 20 größten Intensitätsmaxima und ihrem direkten Nachbarn in der fokalen Intensitätsverteilung durchgeführt wird.

8. Verfahren nach Anspruch 6, **dadurch gekennzeichnet, dass** widersprüchliche Phasenvorzeichen in einzelnen Intensitätsmaxima dadurch aufgelöst werden, dass dasjenige Phasenvorzeichen gewählt wird, das in Relation zum größeren benachbarten Intensitätsmaximum vergeben wurde.

9. Verfahren nach Anspruch 1-8, **dadurch gekennzeichnet, dass** übrig gebliebene Flächenabschnitte in der fokalen Intensitätsverteilung mit geringer Intensität, die nicht klar zugeordnet werden können, mit der neutralen Phase 0° versehen werden.

10. Verfahren nach einem der Ansprüche 1-9, **dadurch gekennzeichnet, dass** die erfindungsgemäßen Verfahrensschritte wiederholt werden, sofern nach der ersten Anwendung dieser Verfahrensschritte keine ausreichende Qualität der Phasenvorzeichenverteilung erreicht werden kann.

11. Verfahren nach einem der Ansprüche 1-10, **dadurch gekennzeichnet, dass** das Erfassen der fokalen Lichtintensitätsverteilung durch eine auf der Empfängerseite vorhandene Tracking-Kamera erfolgt.

**Claims**

1. Method for adjusting atmospherically distorted optical wave fronts in optical free beam communication systems, the method comprising the following steps:

   - detecting the light intensity distribution on the receiver side in the focal point of a receiver device,
   - applying a watershed algorithm to the detected focal intensity distribution so that those contiguous surface sections in the focus of the receiver device are approximately determined, in which the light intensity has a constant phase sign,
   - allocating a phase sign distribution in the value range [-n/2; n/2], wherein a phase sign is assigned to each intensity maximum by the following steps:

      - establishing an intensity profile curve from one intensity maximum to an adjacent intensity maximum,
      - assigning two different phase signs to the intensity maxima considered, provided the intensity falls below a fixed threshold value along the profile curve between the intensity maxima,
      - assigning two phase signs of the same type to the intensity maxima considered, provided the intensity does not fall below a fixed threshold value along the profile curve between the intensity maxima.

2. Method of claim 1, **characterized by** the further method steps:

   - combining the determined focal phase sign distribution having the value range [-n/2; n/2] and possibly [0] with the known focal amplitude distribution, wherein the amplitudes are obtained from the root of the intensities of the focal speckle patterns (FSP),
   - transforming the focal phase sign distribution by means of a two-dimensional Fourier retransformation into the aperture,
   - transmitting the aperture wave front, calculated from the phase sign distribution of the aperture field, to a deformable mirror situated in the beam path for correcting the wave front distortion.

3. Method of claim 1 or 2, **characterized in that** the watershed algorithm is applied to the negated focal intensity distribution.

4. Method of one of claims 1-3, **characterized in that**, for the determination of the phase sign of two adjacent intensity maxima, the threshold value in the intensity profile curve is determined based on the ratio of the minimum value to the mean value in the intensity profile curve or based on the standardized variance.

**5.** Method of one of claims 1-4, **characterized in that**, upon establishing the intensity profile curve between two adjacent maxima, the direct connection between these maxima is taken into consideration.

**6.** Method of one of claims 1-5, **characterized in that** the allocation of the phase sign distribution starts with the surface section having the highest intensity maximum, wherein the intensity profile curves to all adjacent maxima are checked for the threshold value in order to determine their phase sign relative to the phase sign of the highest maximum, subsequently, the allocation of the phase sign distribution is continued with the surface section having the second highest intensity maximum and its immediate neighbor maxima, and

the allocation of the phase sign distribution is continued with the next lower intensity maxima, in particular until all maxima recognizable in the focal intensity distribution have been assigned phase signs.

**7.** Method of claim 6, **characterized in that** the allocation of the phase sign distribution is performed for the 5, 10 or 20 highest intensity maxima and their direct neighbors in the focal intensity distribution.

**8.** Method of claim 4, **characterized in that** contradictory phase signs in individual intensity maxima are resolved by selecting the phase sign allocated with respect to the higher adjacent intensity maximum.

**9.** Method of one of claims 1-8, **characterized in that** remaining surface sections in the focal intensity distribution having a low intensity, which cannot be allocated unambiguously, are assigned the neutral phase 0°.

**10.** Method of one of claims 1-9, **characterized in that** the method steps of the invention are repeated, provided that no sufficient quality of the phase sign distribution can be achieved after the first application of the method steps.

**11.** Method of one of claims 1-10, **characterized in that** the detection of the focal light intensity distribution is performed with a tracking camera present on the receiver side.

**Revendications**

**1.** Procédé de correction de fronts d'ondes optiques déformés dans l'atmosphère dans des systèmes de communication optiques à rayonnement en espace libre, comprenant les étapes suivantes :

- détecter la distribution de l'intensité de la lumière du côté récepteur dans le foyer d'un dispositif récepteur,
- appliquer un algorithme de la ligne de partage des eaux (« Watershed ») à la distribution d'intensité focale détectée, de sorte que soient définies de manière approximative dans le foyer du dispositif récepteur les portions de surface contiguës dans lesquelles l'intensité lumineuse a un signe de phase constant,
- attribuer une répartition de signes de phase dans la plage de valeurs $[-\pi/2; \pi/2]$, un signe de phase étant affecté à chaque maximum d'intensité par les étapes suivantes :

  - établissement d'une allure de profil d'intensité d'un maximum d'intensité à un maximum d'intensité voisin,
  - affectation de deux signes de phase différents aux maxima d'intensité considérés, dans la mesure où l'intensité dans l'allure de profil entre ces maxima d'intensité est inférieure à une valeur seuil définie,
  - affectation de deux signes de phase identiques aux maxima d'intensité considérés, dans la mesure où l'intensité dans l'allure de profil entre ces maxima d'intensité n'est pas inférieure à la valeur seuil définie.

**2.** Procédé selon la revendication 1, **caractérisé par** les autres étapes de procédé suivantes :

- combiner la répartition de signes de phase focale déterminée avec la plage de valeurs $[-\pi/2; \pi/2]$ et, le cas échéant, [0] avec la distribution d'amplitudes focale connue, les amplitudes étant acquises à partir de la racine des intensités de la figure focale de tavelures (Focal Speckle Pattern - SFP),
- transformer la répartition de signes de phase focale via une transformation de Fourier inverse bidimensionnelle dans l'ouverture,
- transmettre le front d'onde d'ouverture, calculé à partir de la répartition de signes de phase du champ d'ouverture, à un miroir déformable se trouvant dans la trajectoire du faisceau pour corriger la déformation du front d'onde.

**3.** Procédé selon la revendication 1 ou 2, **caractérisé en ce que** l'algorithme de la ligne de partage des eaux est appliqué à la distribution d'intensité focale inversée.

**4.** Procédé selon l'une des revendications 1 à 3, **caractérisé en ce que** la valeur seuil dans l'allure de profil d'intensité est définie pour déterminer le signe de phase de deux maxima d'intensité voisins, sur la base du rapport entre la valeur minimale et la valeur moyenne dans l'allure de profil d'intensité ou sur la base de la variance normalisée.

**5.** Procédé selon l'une des revendications 1 à 4, **caractérisé en ce qu'**est prise en compte, lors de l'établissement de l'allure de profil d'intensité entre deux maxima voisins, la relation directe entre ces maxima.

**6.** Procédé selon l'une des revendications 1 à 5, **caractérisé en ce que**, lors de l'attribution de la répartition de signes de phase, on commence, pour la portion de surface, par le plus grand maximum d'intensité, les allures de profil d'intensité pour tous les maxima voisins étant contrôlés par rapport à la valeur seuil pour déterminer leur signe de phase en relation avec le signe de phase du plus grand maximum,
on poursuit ensuite l'attribution de la répartition de signes de phase pour la portion de surface avec le deuxième plus grand maximum d'intensité et ses maxima voisins directs et
on poursuit l'attribution de la répartition de signes de phase pour les maxima d'intensité inférieurs suivants, en particulier jusqu'à ce que tous les maxima détectables dans la distribution d'intensité focale soient pourvus de signes de phase.

**7.** Procédé selon la revendication 6, **caractérisé en ce que** l'attribution de la répartition de signes de phase est exécutée pour les 5, 10 ou 20 plus grands maxima d'intensité et leur voisins directs dans la distribution d'intensité.

**8.** Procédé selon la revendication 6, **caractérisé en ce que** des signes de phase contradictoires dans différents maxima d'intensité sont résolus **en ce que** l'on choisit le signe de phase qui a été attribué en relation avec le plus grand maximum d'intensité voisin.

**9.** Procédé selon l'une des revendications 1 à 8, **caractérisé en ce que** des portions de surface restantes dans la distribution d'intensité focale de plus faible intensité, qui ne peuvent être clairement affectées, sont pourvues de la phase neutre 0°.

**10.** Procédé selon l'une des revendications 1 à 9, **caractérisé en ce que** les étapes de procédé selon l'invention sont réitérées si, après la première application de ces étapes de procédé, une qualité suffisante de la répartition de signes de phase ne peut être obtenue.

**11.** Procédé selon l'une des revendications 1 à 10, **caractérisé en ce que** la détection de la distribution d'intensité lumineuse focale est réalisée par une caméra de poursuite présente du côté récepteur.

eintreffendes atmosphärisch
gestörtes optisches Feld

Focal
Speckle
Pattern

Tracking-
kamera

**Fig.1**

Fig.2

Verformbarer
Spiegel

Atmospherische
Turbulenzen

Wellenfront
Rekonstruktion
&
Spiegelsteuerung

Transmitter

Perfekte (ebene)
Optische Wellenfront
beim Transmitter

Gestörte
optische
Wellenfront

Wellenfront
Sensor

EP 2 388 934 B1

**Fig.3**

**Fig.4a**

**Fig.4b**

**Fig.5**

**Fig.6a**

**Fig.6b**

**Fig.7a**

**Fig.7b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 0620694 A

**In der Beschreibung aufgeführte Nicht-Patentliteratur**

- **J. W. GOODMAN.** Introduction to Fourier Optics. Mc-Graw-Hill, 1996

- **D. GIGGENBACH.** *Optimierung der optischen Freiraumkommunikation durch die turbulente Atmosphäre - Focal Array Receiver,* 229